Europäisches Patentamt

(19) European Patent Office

Office européen des brevets

(11) Publication number: **0 231 534**
**B1**

# EUROPEAN PATENT SPECIFICATION

(12)

(45) Date of publication of the patent specification:
25.07.90

(51) Int. Cl.⁵: **B65G 57/04,** B65G 59/04

(21) Application number: **86201930.4**

(22) Date of filing: **05.11.86**

(54) Device for conveying tins from a pallet onto a conveyor belt.

(30) Priority: **15.01.86  NL 8600068**

(43) Date of publication of application:
**12.08.87 Bulletin 87/33**

(45) Publication of the grant of the patent:
**25.07.90 Bulletin 90/30**

(84) Designated Contracting States:
**AT BE CH DE ES FR GB GR IT LI LU NL SE**

(56) References cited:
**DE-A- 1 815 651**
**DE-C- 2 222 678**
**FR-A- 2 241 859**
**FR-A- 2 244 242**
**US-A- 4 358 236**

(73) Proprietor: **Speciaal-Machinefabriek J.H. van Uitert B.V.,**
**Industriestraat 14-16, NL-5107 NC Dongen(NL)**

(72) Inventor: **van Uitert, Johannes Hendrikus, Vaartweg 33,**
**NL-5109 RB 's-Gravenmoer(NL)**

(74) Representative: **Lips, Hendrik Jan George, Ir. et al,**
**HAAGSCH OCTROOIBUREAU Breitnerlaan 146,**
**NL-2596 HG Den Haag(NL)**

## Description

The invention relates to a device for taking up a layer of tins positioned one beside the other, from a pallet and for conveying these onto a conveyor belt, said device comprising a first endless conveyor belt which extends around a series of rollers at least one of which is driven, such that the lower run of the first conveyor belt extends in a substantially horizontal direction above a pallet with layers of magnetizable tins stacked thereon, whereby directly above the lower run of the first conveyor belt two plate-shaped magnets are provided, the first one of which has an area at least as large as the upper surface area of the pallet, said magnets lying adjacent each other in the direction of movement of the lower run of the first conveyor belt such that the first plate-shaped magnet is positioned above the pallet with the magnetizable tins and that the lower run of the first conveyor belt lies between the magnet and the tins, a support surface being provided for the pallet, said support surface being vertically displaceable towards and away from the said first plate-shaped magnet, a second conveyor belt being positioned below the second plate-shaped magnet and below the lower run of the first conveyor belt such that tins released by said second plate-shaped magnet are deposited on the said second conveyor belt, said second conveyor belt being driven.

Such a device is known from DE-B 2 222 678. In case of this known device the plate-shaped magnets are permanent magnets and are fixedly positioned above the lower part of said first conveyor belt. Further the second plate-shaped magnet is applying an attracting force on the tins which is decreasing in the direction of movement of the tins, so that the tins will be released by said magnet.

In this known device the tins have to be removed in rows, because it is necessary that a number of tins are supporting the separating plate present between adjacent layers, so that this plate can be fed into the plate capturing apparatus. To that end it is necessary that the leading edge of said plate is free from tins.

In view of the fact that there can be differences in the sizes and/or the weight of the conveyed tins the possibility exists that the one tin is released by the magnet somewhat earlier than a preceding tin so that the tins will not be deposited onto the second conveyor belt in the same pattern as they were picked up from the pallet.

Now the object of the invention is to remove this disadvantage. To that end a device according to the invention is characterized in that the second plate-shaped magnet also has a surface area corresponding to the surface area of the pallet, said second magnet being such that the magnetic force exerted by the second magnet which pulls the tins against the lower run of the first conveyor belt can be varied and such that a complete layer of tins which has arrived above the second conveyor belt can be released by the second magnet at one and the same time.

Further it can be pointed to FR-A 2 244 242 describing a conveyor device comprising a conveyor belt above the lower run of which magnetic elements are provided. By the magnetic elements magnetizable objects are picked up at one place and are moved by the conveyor to another place where the magnetic force is decreased so that the objects are deposited at another place.

In case of the device according to the present invention it is preferred that also the first plate-shaped magnet is executed such that the magnetic force exerted by it and which pulls the tins against the lower run of the first conveyor belt can be varied.

In this way it is guaranteed that all tins of a layer can be pulled against the conveyor belt at the same moment. In view of this it is prevented that a tin which is not yet attracted by the magnet is hampering the movement of the other tins.

In this way a particularly simple and reliable acting device is obtained making little noise as well.

According to a first embodiment of the invention the plate-shaped magnets are permanent magnets and are displaceable substantially in vertical direction above the lower run of the first conveyor belt.

It will be obvious that when the permanent magnets are positioned close above said run of the conveyor belt tins can be attracted while when afterwards the magnet is moved upwardly the tins will be checked by the conveyor belt so that they will get free from the magnet.

According to an other embodiment it is also possible that the plate-shaped magnets are electro-magnets which may be energized in a controlled way.

In this case the current to the magnets can be switched on and off so that the magnets may hold the tins or release them.

In order to set down a number of tins on the second conveyor belt in a well controlled way, also if the distance between both conveyor belts is much larger than the height of the tins, it may be provided that a plate-shaped magnet is mounted below the upper run of said second conveyor belt at a location substantially vertically below the second plate-shaped magnet of the first conveyor belt.

According to a preferred embodiment of the invention it may be provided, that the first conveyor belt is continuously moving with a speed between 1 and 40 m/min. and that the moment at which a layer of tins is released by the second magnet is determined by a sensor, the speed of the second conveyor belt being at least equal to that of the first conveyor belt.

It is, however, also possible that the first conveyor belt is moving discontinuously and is stopped when a sensor has detected that a layer of tins has been brought above the second conveyor belt whereafter the tins are set down on the second conveyor belt.

In order to make the device suitable for various types of tins it may be provided that the vertical distance between the first and the second conveyor belt is adjustable.

Though in most cases the first conveyor belt will be in a substantially horizontal position it is also possible that it is inclined by ± 20°.

For controlling the device in particular use will be made of a relay or PLC programmable logic chip controlling.

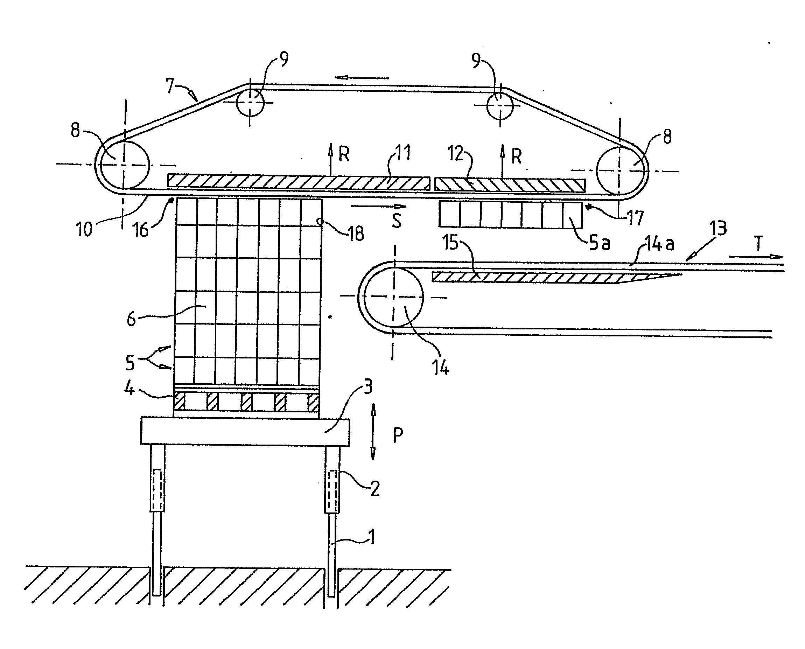

The invention now will be elucidated by means of an example, a side view of which is shown in the drawing.

The device shown in the drawing comprises some fixed support legs 1, over which additional legs may be moved carrying a support plate 3 on which a pallet 4 is present on which a number of layers 5 of tins 6 are stacked.

The support plate 3 is moveable upwards and downwards in vertical direction as indicated by the arrow P. This movement e.g. can take place by telescoping the legs 1 and 2 in- and outwardly by hydraulical or mechanical means.

An endless conveyor belt 7 runs over reversing rollers 8 of which at least one will be driven and over guide rollers 9. Above the lower run 10 of the conveyor belt two plate-shaped magnets 11 and 12 are positioned which are placed closely together.

As stated already above the magnets 11 and 12 may be electro-magnets but they may be movable in vertical direction too, as indicated with the arrows R. If then they are far enough away from the lower run 10 of the conveyor belt 7 they will release the tins 6.

When using the device the conveyor belt 7 will move in the direction of the arrow S and the magnets 11 will be energized or will be positioned so close above the part 10 of the conveyor belt 7 that the upper layer 5 of tins 6 will be attracted by the magnets 11 and will be taken along by the conveyor belt 7 until the layer is positioned below the magnet 12, as indicated by 5a.

By deenergizing the magnet 12, if this is an electromagnet, or by moving upwardly the magnet 12 if this is a permanent magnet, the layer 5a may be released from the magnet and it will be set down onto the second conveyor belt 13 of which only a part is shown in the drawing and which is running over the reversing roller 14.

Another magnet 15 still may be provided below the upper run, 14a of the second conveyor belt 13 in order to pick up the tins in the correct position. Preferably the magnet 15 will be a permanent magnet because the tins will be released automatically from the magnet 15 on movement of the conveyor belt 13 in the direction of the arrow T.

For controlling the device primary use can be made of a sensor 16 observing whether the support plate has been moved upwardly to such an extent that the tins can be attracted by the magnet 11. The sensor 16 simultaneously can serve for controlling the height-adjustment of support plate 3. The sensor may be of the mechanical type but e.g. also can be formed by a light source with relating recorder.

In order to observe whether the tins taken along by the conveyor belt 7 are in the position above the second conveyor belt 13, use can be made of a sensor 17 which then ascertains that the tins are put down on the second conveyor belt.

Additionally a further sensor 18 may be present to observe whether a layer of tins 5 is displaced far enough towards the right, as seen in the drawing, to bring the support plate 3 upwards again in order to supply the subsequent layer of tins to the magnets 11.

**Claims**

1. A device for taking up a layer (5) of tins (6) positioned one beside the other, from a pallet (4) and for conveying these onto a conveyor belt (13), said device comprising a first endless conveyor belt (7) which extends around a series of rollers (8, 9) at least one of which is driven, such that the lower run (10) of the first conveyor belt (7) extends in a substantially horizontal direction above a pallet (4) with layers of magnetizable tins (6) stacked thereon, whereby directly above the lower run (10) of the first conveyor belt (7) two plate-shaped magnets (11, 12) are provided, the first one (11) of which has an area at least as large as the upper surface area of the pallet (4), said magnets (11, 12) lying adjacent each other in the direction of movement (S) of the lower run (10) of the first conveyor belt (7) such that the first plate-shaped magnet (11) is positioned above the pallet (4) with the magnetizable tins (6) and that the lower run (10) of the first conveyor belt (7) lies between the magnet (11) and the tins (6), a support surface (3) being provided for the pallet (4), said support surface (3) being vertically displaceable towards and away from the said first plate-shaped magnet (11), a second conveyor belt (13) being positioned below the second plate-shaped magnet (12) and below the lower run (10) of the first conveyor (7) such that tins (6) released by said second plate-shaped magnet (12) are deposited on the said second conveyor belt (13), said second conveyor belt being driven; characterized in that the second plate-shaped magnet (12) also has a surface area corresponding to the surface area of the pallet (4), said second magnet (12) being such that the magnetic force exerted by the second magnet (12) which pulls the tins (6) against the lower run (10) of the first conveyor belt (7) can be varied and such that a complete layer (5) of tins which has arrived above the second conveyor belt (13) can be released by the second magnet (12) at one and the same time.

2. A device according to claim 1, characterized in that the first plate-shaped magnet (11) is executed such that the magnetic force exerted by it and which pulls the tins (6) against the lower run (10) of the first conveyor belt (7) can be varied.

3. A device according to claim 2, characterized in that the plate-shaped magnets (11, 12) are permanent magnets and are displaceable substantially in vertical direction above the lower run (10) of the first conveyor belt (7).

4. A device according to claim 2, characterized in that the plate-shaped magnets (11, 12) are electromagnets which are energized in a controlled way.

5. A device according to one of the preceding claims, characterized in that a plate-shaped magnet (15) is mounted below the upper run (14a) of said second conveyor belt (13) at a location substantially vertically below the second plate-shaped magnet (12) of the first conveyor belt (7).

6. A device according to one the preceding claims, characterized in that the first conveyor belt (7) is continuously moving with a speed between 1 and 40 m/min and that the moment at which a layer (5) of tins (6) is released by the second magnet (12) is determined by a sensor (17), the speed of the second conveyor belt (13) being at least equal to that of the first conveyor belt (7).

7. A device according to one of the claims 1–5, characterized in that the first conveyor belt (7) is moving discontinously and is stopped when a sensor (17) has detected that a layer (5) of tins (6) has been brought above the second conveyor belt (13) whereafter the tins (6) are set down on the second conveyor belt (13).

8. A device according to one of the preceding claims, characterized in that the vertical distance between the first (7) and the second conveyor belt (13) is adjustable.

9. A device according to one of the preceding claims, characterized in that the inclination of the first conveyor belt (7) can be varied by ∓ 20° from the horizontal position.

10. A device according to one of the preceding claims, characterized in that for controlling the device use is made of a relay or PLC (programmable logic chip) controlling.

## Patentansprüche

1. Vorrichtung zum Aufheben einer Lage (5) nebeneinander angeordneten Büchsen (6), von einer Palette (4) und zum Überbringen von diesen auf einem Bandförderer (13), wobei diese Vorrichtung einen ersten endlosen Bandförderer (7) umfasst, der sich um einer Serie von Rollen (8, 9) herum erstreckt, von den welchen mindestens eine angetrieben wird, so dass der untere Trum des ersten Bandförderers (7) sich in einer im wesentlichen horizontalen Richtung erstreckt über einer Palette (4) mit darauf gestapelten Lagen von magnetisierbaren Büchsen (6), wobei unmittelbar über dem unteren Trum (10) des ersten Bandförderers (7) zwei plattenförmige Magnete (11, 12) angeordnet sind, von welchen der erste (11) ein Gebiet hat, das mindestens von gleicher Grösse ist als das obere Flächengebiet der Palette (4), wobei genannte Magnete (11, 12) nebeneinander liegen in der Bewegungsrichtung (S) des unteren Trums (10) des ersten Bandförderers (7) so dass der erste plattenförmige Magnet (11) über der Palette (4) mit den magnetisierbaren Büchsen (6) angeordnet ist und dass der untere Trum (10) des ersten Bandförderers (7) zwischen dem Magnet (11) und den Büchsen (6) liegt, wobei eine Auflagefläche (3) für die Palette (4) vorgesehen ist, welche Auflagefläche (3) senkrecht verstellbar ist nach dem genannten ersten plattenförmigen Magnet (11) hinzu und davon ab, und ein zweiter Bandförderer (13) angeordnet ist unter dem zweiten plattenförmigen Magnet (12) und unter dem unteren Trum (10) des ersten Bandförderers (7), so dass Büchsen (6) von dem genannten zweiten plattenförmigen Magnet (12) freigegeben werden, auf dem genannten zweiten Bandförderer (13) gestellt werden, wobei genannter zweite Bandförderer (13) angetrieben wird; dadurch gekennzeichnet, dass der zweite plattenförmige Magnet (12) auch ein Flächengebiet hat das mit dem Flächengebiet der Palette (4) übereinstimmt, wobei genannter zweite Magnet (12) derartig ist, dass die magnetische Kraft die von dem zweiten Magnet (12), der die Büchsen (6) gegen dem unteren Trum (10) des ersten Bandförderers (7) zieht, ausgeübt wird geändert werden kann und zwar so, dass eine vollständige Lage (5) von Büchsen die über dem zweiten Bandförderer (13) angekommen ist zur gleichen Zeit von dem zweiten Magnet (12) freigegeben werden kann.

2. Vorrichtung nach Anspruch 1, dadurch gekennzeichnet, dass der erste plattenförmige Magnet (11) derartig ausgebildet ist, dass die magnetische Kraft welche von ihm ausgeübt wird und welche die Büchsen (6) gegen dem unteren Trum (10) des ersten Bandförderers (7) zieht, geändert werden kann.

3. Vorrichtung nach Anspruch 2, dadurch gekennzeichnet, dass die plattenförmigen Magnete (11, 12) permanente Magnete sind und im wesentlichen in senkrechter Richtung verstellbar sind über dem unteren Trum (10) des ersten Bandförderers (7).

4. Vorrichtung nach Anspruch 2, dadurch gekennzeichnet, dass die plattenförmigen Magnete (11, 12) Elektromagnete sind, die auf eine gesteuerte Weise erregt werden.

5. Vorrichtung nach einem der vorhergehenden Ansprüche, dadurch gekennzeichnet, dass ein plattenförmiger Magnet (15) unterhalb des oberen Trums (14a) des genannten zweiten Bandförderers (13) angeordnet ist an einer Stelle die im wesentlichen senkrecht unter dem zweiten plattenförmigen Magnet (12) des ersten Bandförderers (7) liegt.

6. Vorrichtung nach einem der vorhergehenden Ansprüche, dadurch gekennzeichnet, dass der erste Bandförderer (7) kontinuierlich bewegt mit einer Geschwindigkeit zwischen 1 und 40 m/min und das der Moment auf dem eine Lage (5) von Büchsen (6) von dem zweiten Magnet (12) freigegeben wird von einem Sensor (17) bestimmt wird, wobei die Geschwindigkeit des zweiten Bandförderers (13) zumindest gleich an die des ersten Bandförderers (7) ist.

7. Vorrichtung nach einem der Ansprüche 1–5, dadurch gekennzeichnet, dass der erste Bandförderer diskontinuierlich bewegt und gestoppt wird wenn ein Sensor (17) beobachtet hat dass eine Lage (5) von Büchsen (6) oberhalb des zweiten Bandförderers (13) gebracht worden ist, worauf die Büchsen (6) auf dem zweiten Bandförderer (13) abgestellt werden.

8. Vorrichtung nach einem der vorhergehenden Ansprüche, dadurch gekennzeichnet, dass die senkrechte Distanz zwischen dem ersten (7) und dem zweiten Bandförderer (13) einstellbar ist.

9. Vorrichtung nach einem der vorhergehenden Ansprüche, dadurch gekennzeichnet, dass die Schrägstellung des ersten Bandförderers (7) um ∓20° von der horizontalen Position abgeändert werden kann.

10. Vorrichtung nach einem der vorhergehenden Ansprüche, dadurch gekennzeichnet, dass für die Steuerung der Vorrichtung ein Relais oder PLC (programmable logic chip) Steuerung verwendet wird.

## Revendications

1. Un dispositif pour déplacer une couche (5) de boîtes (6) placées l'une à côté de l'autre, à partir d'une palette (4) et pour transporter celle-ci sur une bande de manutention (13), ledit dispositif comprenant une première bande de manutention sans fin (7) qui s'étend autour d'un ensemble de rouleaux (8, 9) dont au moins un est commandé, de sorte que le circuit inférieur (10) de la première bande de manutention (7) s'étende dans une direction essentiellement horizontale au-dessus d'une palette (4) avec des couches de boîtes magnétisables (6) empilées dessus, où directement au-dessus du circuit inférieur (10) de la première bande de manutention (7) deux aimants en forme de plaque (11, 12) sont fournis, dont le premier aimant (11) a une surface au moins aussi grande que la surface supérieure de la palette (4), lesdits aimants (11, 12) reposant l'un à côté de l'autre dans la direction du mouvement (5) du circuit inférieur (10) de la première bande de manutention (7) de sorte que le premier aimant en forme de plaque (11) est placé au-dessus de la palette (4) avec les boîtes magnétisables (6) et que le circuit inférieur (10) de la première bande de manutention (7) se trouve entre l'aimant 11 et les boîtes (6), une surface de support (3) étant déplaçable verticalement pour se rapprocher ou s'éloigner dudit premier aimant en forme de plaque (11), une seconde bande de manutention (13) étant située au-dessous du second aimant en forme de plaque (12) et au-dessous du circuit inférieur (10) de la première bande de manutention (7), de sorte que les boîtes (6) libérées par ledit second aimant en forme de plaque (12) sont déposées sur la seconde bande de manutention (13), ladite seconde bande de manutention étant commandée; caractérisé en ce que le second aimant en forme de plaque (12) a aussi une surface correspondant à la surface de la palette (4), ledit second aimant (12) étant tel que la force magnétique exercée par le second aimant (12) qui retient les boîtes (6) contre le circuit inférieur (10) de la première bande de manutention (7) puisse être modifiée et tel qu'une couche complète (5) de boîtes qui est arrivée au-dessus de la seconde bande de manutention (13) puisse être libérée par le second aimant (12) en une et même fois.

2. Un dispositif selon la revendication 1, caractérisé en ce que le premier aimant en forme de plaque (11) est réalisé de sorte que la force magnétique exercée par lui et qui retient les boîtes (6) contre le circuit inférieur (10) de la première bande de manutention (7) puisse être variée.

3. Un dispositif selon la revendication 2, caractérisé en ce que les aimants en forme de plaque (11, 12) sont des aimants permanents et sont déplaçables essentiellement dans une direction verticale au-dessus du circuit inférieur (10) de la première bande de manutention (7).

4. Un dispositif selon la revendication (2) caractérisé en ce que les aimants en forme de plaque (11, 12) sont des électro-aimants qui sont aimantés de façon contrôlée.

5. Un dispositif selon l'une des revendications précédentes, caractérisé en ce que un aimant en forme de plaque (15) est monté au-dessous du circuit supérieur (14a) de ladite seconde bande de manutention (13) à un endroit essentiellement sur la verticale au-dessous du second aimant en forme de plaque (12) de la première bande de manutention (7).

6. Un dispositif selon l'une des revendications précédentes, caractérisé en ce que la première bande de manutention (7) est en mouvement continu avec une vitesse entre 1 et 40 m/min et que le moment auquel une couche (5) de boîtes (6) est libérée par le second aimant (12) est déterminé par un capteur (17), la vitesse de la seconde bande de manutention (13) étant au moins égale à celle de la première bande de manutention (7).

7. Un dispositif selon une des revendications 1–5 caractérisé en ce que la première bande de manutention (7) est en mouvement discontinu et est stoppée quand un capteur (17) a détecté qu'une couche (15) de boîtes (6) a été amenée au-dessus de la seconde bande de manutention (13) après quoi les boîtes (6) sont déposées sur la seconde bande de manutention (13).

8. Un dispositif selon une des revendications précédentes, caractérisé en ce que la distance verticale entre les première (7) et seconde (13) bandes de manutention est ajustable.

9. Un dispositif selon une des revendications précédentes, caractérisé en ce que l'inclinaison de la première bande de manutention (7) peut être variée de ±20° à partir de la position horizontale.

10. Un dispositif selon une des revendications précédentes, caractérisé en ce que pour commander le dispositif on utilise un relais ou commande PLC (contrôleur logique programmable).

EP 0 231 534 B1